# EUROPÄISCHE PATENTANMELDUNG

(11) **EP 2 409 870 A2**
(43) Veröffentlichungstag der Anmeldung: **25.01.2012**
(21) Anmeldenummer: 11005778.3
(22) Anmeldetag: 14.07.2011
(51) Int. Cl.: B60J 10/10

(54) **Dichtungsvorrichtung für ein Faltverdeck**

(30) Priorität: 20.07.2010 DE 102010027606
(71) Anmelder: Magna Car Top Systems GmbH, 74321 Bietigheim-Bissingen (DE)
(72) Erfinder: Herz, Konrad, 71287 Weissach (DE)

(57) **Zusammenfassung**

Diese Dichtungsvorrichtung (7) ist für ein Faltverdeck (2) eines Personenkraftwagens konzipiert, welche Dichtungsvorrichtung benachbart von oberen Randzonen (4) von Seitentürscheiben (5) verlaufende Dichtkörper (11) aufweist, welches an einem Aufbau (3) zwischen einer Schließstellung (Schst) und einer Offenstellung bewegliche, einen Verdeckbezug (10) umfassende Faltverdeck ein Verdeckgestänge (9) mit entlang der jeweiligen Randzone der Seitentürscheibe sich erstreckenden Rahmenelementen (8) versehen ist, wobei zwischen den Rahmenelementen und einem Verdeckabschnitt des Faltverdecks der entsprechende Dichtkörper angeordnet ist, der an den Rahmenelementen in Lage gehalten wird.
Um diese Dichtungsvorrichtung zu optimieren, ist der Dichtkörper zwischen einem vorderen Verdeckabschnitt (Vdv), einem mittleren Verdeckabschnitt (Vdm) und einem hinteren Verdeckabschnitt (Vdh) mit einem gleichen oder wirkungsähnlichen Querschnitt (Q1,Q2 und Q3) versehen, welcher Dichtkörper an dem zugehörigen Rahmenelement form- und/oder kraftschlüssig gehalten ist.

## Beschreibung

Die Erfindung bezieht sich auf eine Dichtungsvorrichtung für ein Faltverdeck eines Personenkraftwagens nach dem Oberbegriff des Patentanspruchs 1.

Es ist ein Cabriolet-Fahrzeug mit einer faltbaren Verdeck-Dachhaut bekannt, EP 0 806 313 B1, die von einem Verdeckgestell getragen wird. Im vorderen Bereich des Verdeckgestells ist eine Dachkappe aus einem Strangpressprofil vorgesehen. An die Dachkappe schließen Seitenrahmen an, die ebenfalls aus Strangpressprofilen bestehen. Jeder Seitenrahmen trägt einen Dichtkörper für eine Türscheibe und nimmt mit einem Stützteil die Verdeck-Dachhaut auf.

Die DE 295 09 880 U1 gibt ein Dichtungsprofil für ein Faltverdeck eines Cabriolet-Fahrzeugs wieder. Das Dichtungsprofil umfasst einen metallischen Träger und ist unter Vermittlung von Schrauben an einem Dachlenker befestigt. An dem Dichtungsprofil angeformt sind erste und zweite Dichtlippen, die mit einer Innenseite und einer Außenseite einer Türscheibe zusammenwirken. Ein dritte Lippe des Dichtungsprofils stützt sich an einer Tasche einer Innenseite eines Verdeckbezugs ab. In der Tasche ist ein Spannseil verlegt.

Es ist Aufgabe der Erfindung, eine Dichtungsvorrichtung für ein Faltverdeck eines Personenkraftwagens zu konzipieren, die funktionsgerecht ausgelegte und entlang von oberen Randzonen von Seitentürscheiben verlaufende Dichtkörper aufweist. Dabei sollte aber auch sichergestellt sein, dass die Dichtkörper sich problemlos in eine vorgegebene Faltverdeckstruktur integrieren lassen.

Diese Aufgabe wird nach der Erfindung durch die Merkmale des Patentanspruchs 1 gelöst. Weitere die Erfindung ausgestaltende Merkmale sind in den Unteransprüchen enthalten.

Die mit der Erfindung hauptsächlich erzielten Vorteile sind darin zu sehen, dass jeder Dichtkörper der Dichtungsvorrichtung zwischen vorderem Verdeckabschnitt, mittlerem

Verdeckabschnitt und hinterem Verdeckabschnitt einen gleichen oder wirkungsähnlichen Querschnitt aufweist, was zur guten Funktion und auch vergleichsweise günstigen Herstellung des Dichtkörpers bspw. durch Extrudieren beiträgt. Auch lässt sich der Dichtkörper vorbildlich in die Faltverdeckstruktur benachbart der Randzone der Türscheibe einbauen. Hervorzuheben ist auch die konstruktiv einfach ausgelegte Befestigungsart des Dichtkörpers an den Rahmenelementen des Verdeckgestänges, nämlich form-/ und oder kraftschlüssig. Die nebeneinander liegenden Schlauchabschnitte mit ihren verschiedenen Dichtabschnitten, die sich u .a. an der Außenseite und der Innenseite der Seitentürscheibe abstützen, bewirken eine ausgezeichnete Dichtwirkung.

In der Zeichnung wird ein Ausführungsbeispiel der Erfindung gezeigt, das nachstehend näher erläutert wird.

Es zeigen
Fig. 1 eine schematische Schrägansicht eines Faltverdecks von hinten links oben mit einer Seitentürscheibe,
Fig. 2 einen Schnitt nach der Linie ll-ll der Fig. 1 in einem vorderen Dachabschnitt des Faltverdecks, jedoch in größerem Maßstab,
Fig. 3 einen Schnitt nach der Linie III-III der Fig. 1 in einem mittleren Dachabschnitt des Faltverdecks, jedoch in größerem Maßstab,
Fig. 4 einen Schnitt nach der Linie lV-lV der Fig. 1 in einem hinteren Dachabschnitt des Faltverdecks, jedoch in größerem Maßstab.

Von einem Personenkraftwagen 1 ist lediglich ein Faltverdeck 2 dargestellt, das an einem nur bereichsweise abgebildeten Aufbau 3 zwischen einer Schließstellung Schst und einer Offenstellung -nicht gezeigt- betätigbar ist und an Längsseiten Ls des Faltverdecks 2 an obere Randzonen 4 von Seitentürscheiben 5 angrenzt. Jede Seitentürscheibe 5 ist höhenverstellbar in einer Tür 6 bewegbar und in einem rückwärtigen Bereich des Faltverdecks 2 ist eine Heckscheibe Hsch vorgesehen. Benachbart der oberen Randzone 4 der Seitentürscheibe 5 verläuft eine Dichtungsvorrichtung 7 und ein Rahmenelement 8 eines Verdeckgestänges 9, das einen flexiblen Verdeckbezug 10 trägt. Die Dichtungsvorrichtung 7 umfasst einen Dichtkörper 11, der zwischen dem Rahmenelement 8 und einer Verdeckzone 12 des Faltverdecks 2 wirksam ist und am Rahmenelement 8 in Lage gehalten wird.

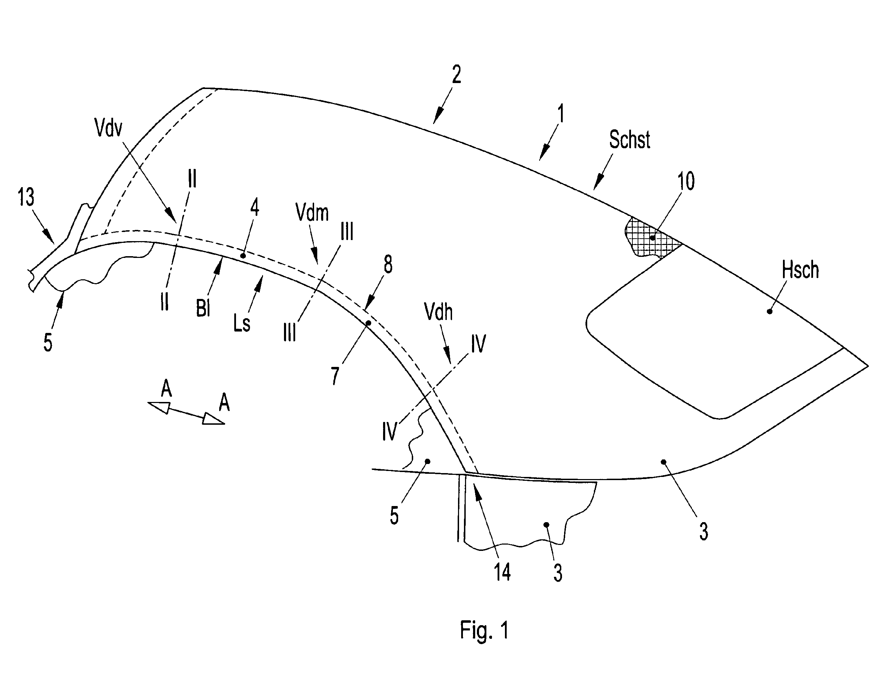

Der aus Gummi, Kunststoff oder dgl. bestehende Dichtkörper 11 ist zwischen einem vorderen Verdeckabschnitt Vdv, einem mittleren Verdeckabschnitt Vdm und einem hinteren Verdeckabschnitt Vdh mit in etwa gleichen und wirkungsähnlichen Querschnitten Q1, Q2 und Q3 versehen. Die Verdeckabschnitte Vdv, Vdm und Vdh, werden durch etwa radial zu einer Bogenlinie BI sich erstreckende Schnittlinien ll-ll, lll-lll und lV-lV definiert -Fig. 1-, welche Bogenlinie Bl, auch E-Linie genannt, -in Fahrzeuglängsrichtung A-A betrachtet- zwischen einem vorne liegenden Windschutzscheibenrahmen 13 und einem rückwärtigen Aufbauabschnitt 14 verläuft.

Der Dichtkörper 11 besitzt -in Fahrzeugquerrichtung B-B gesehen- zwei nebeneinander liegende erste äußere Schlauchabschnitte 15 und zweite innere Schlauchabschnitte 16, die an einem quer -Fahrzeugquerrichtung B-B- ausgerichteten Steg 17 hängen. Dabei wirkt der erste äußere Schlauchabschnitt 15 mit einem ersten Dichtabschnitt 18 mit einer Außenseite 19 der Seitentürscheibe 5 zusammen; der innere Schlauchabschnitt 16 mit einer Innenseite 20 der Seitentürscheibe 5, und zwar über einen zweiten Dichtabschnitt 21. Der erste Schlauchabschnitt 15 stützt sich mit einem dritten Dichtabschnitt 22 an einer Innenseite 23 einer Seitenleiste 24 des Rahmenelements 8 ab, das Bestandteil des Verdeckgestänges 9 ist. Darüber hinaus ist der zweite innere Schlauchabschnitt 16 mit einem vierten Dichtabschnitt 25 mit Druckspannung an eine aufrechte Wand 26 des Rahmenelements 8 bzw. der Seitenleiste 24 angeschlossen.

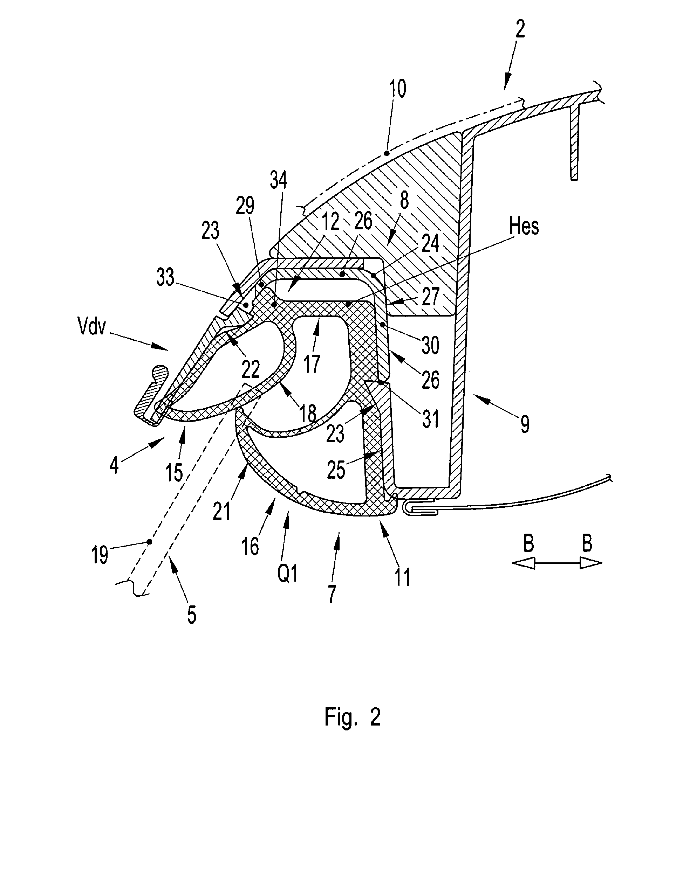

Im Bereich des vorderen Verdeckabschnitts Vdv -Fig. 2- wird der Dichtkörper 11 von der Seitenleiste 24 getragen, die im Querschnitt einen U-förmigen Haltebereich 27 mit einem Steg 28 und Schenkeln 29 und 30 aufweist, wobei im Ausführungsbeispiel die Wand 26 und der Schenkel 30 identisch sind. In dem Haltebereich 27, der einen Halteeinsatz Hes des Dichtkörpers 11 zumindest abschnittsweise umgibt, ist letzterer festgesetzt. Hierzu ist an dem Schenkel 30 ein Widerhaken 31 angebracht, der in eine korrespondierende Ausnehmung 32 des Dichtkörpers 11 mit Formschluss eingreift. Und am Schenkel 29 ist eine Erweiterung 33 angebracht, an der sich eine örtliche Verdickung 34 des Dichtkörpers 11 formschlüssig abstützt.

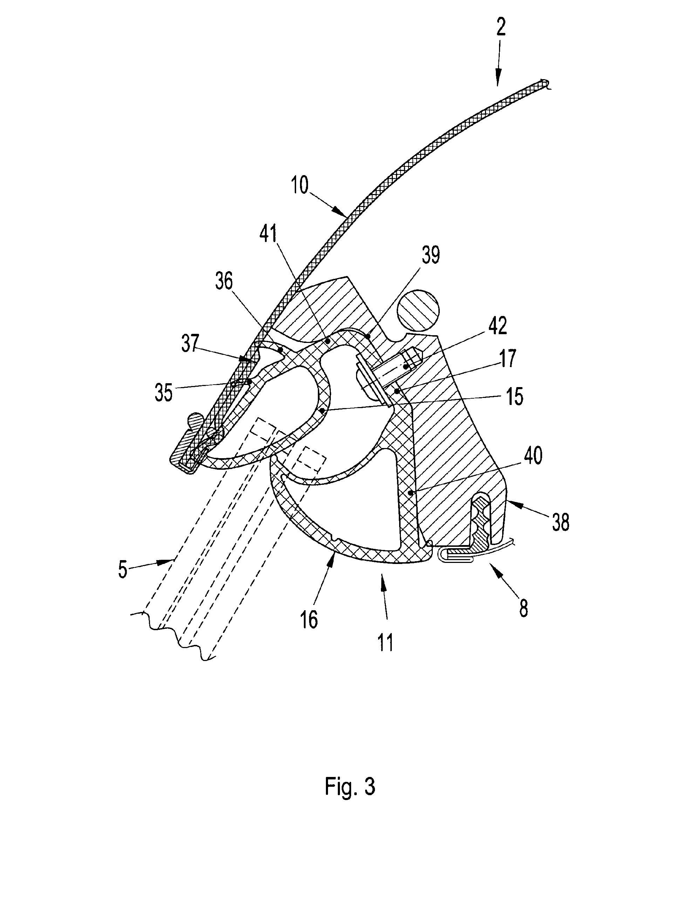

lm mittleren Verdeckabschnitt Vdm -Fig.3- ist der dritte Dichtabschnitt 22 des Dichtkörpers 11 mit einer oder mehreren Dichtlippen 35 und 36 versehen, die mit einer Innenseite 37 des Verdeckbezugs 10 zumindest mittelbar in Wirkverbindung stehen. Ein Dachlenker 38 des Rahmenelements 8 ist mit einem Halteabschnitt 39 für den Steg 17 und Wandabschnitte 40 und 41 des Dichtkörpers 11 ausgestattet. Der Steg 17 ist unter Vermittlung eines lösbaren Haltemittels, z. B. Schraube 42, an dem Halteabschnitt 39 befestigt. Außerdem ist der Dichtkörper 11 im Bereich des hinteren Verdeckabschnitts Vdh ähnlich ausgeführt wie im mittleren Verdeckabschnitt Vdm und im vorderen Verdeckabschnitt Vdv.

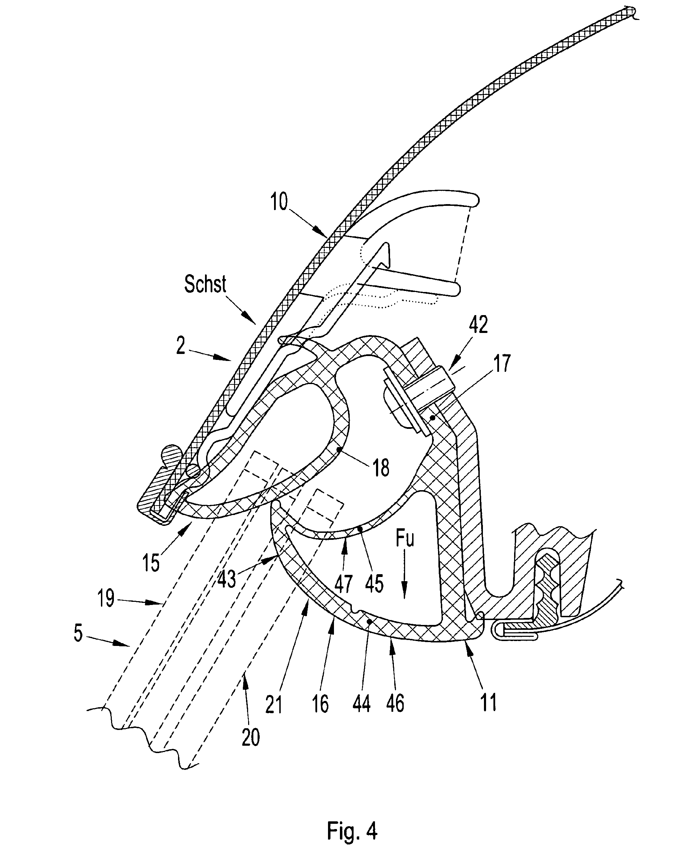

Aus den Fig. 2 bis 4 ist ersichtlich, dass der erste Dichtabschnitt 18 des ersten äußeren Schlauchabschnitts 15 der Dichtung 11 zur Außenseite 19 der Seitentürscheibe 5 konvex gewölbt bzw. ballig ist. Dagegen weist der zur Innenseite 20 der Seitentürscheibe 5 gerichtete zweite Dichtabschnitt 21 des inneren Schlauchabschnitts 16 die Form eines Hakens 43 mit einer unteren Wand 44 und einer oberen Wand 45 auf, deren Bögen 46 und 47 zur Fahrzeugunterseite Fu hin konvex ausgeführt sind und in eine Spitze 46 münden, die gegen die Innenseite 20 der Seitentürscheibe 5 stößt. Diese Bögen 46 und 47 sind so ausgeführt, dass die untere Wand 44 zumindest abschnittsweise durch Formarbeit an der Seitentürscheibe 5 anliegt und die obere Wand 45 durch Verengung des Bogens 47 die Formarbeit der unteren Wand 44 unterstützt.

## Patentansprüche

1. Dichtungsvorrichtung für ein Faltverdeck eines Personenkraftwagens, die benachbart von oberen Randzonen von Seitentürscheiben verlaufende Dichtkörper aufweist, welches an einem Aufbau zwischen einer Schließstellung und einer Offenstellung bewegliche, einen Verdeckbezug umfassende Faltverdeck ein Verdeckgestänge mit entlang der jeweiligen Randzone der Seitentürscheibe sich erstreckenden Rahmenelementen aufweist, wobei zwischen den Rahmenelementen und Verdeckzonen des Faltverdecks der entsprechende Dichtkörper angeordnet ist, der an den Rahmenelementen in Lage gehalten wird, **dadurch gekennzeichnet, dass** der Dichtkörper (11) zwischen einem vorderen Verdeckabschnitt (Vdv), einem mittleren Verdeckabschnitt (Vdm) und einem hinteren Verdeckabschnitt (Vdh) mit einem gleichen oder wirkungsähnlichen Querschnitt (Q1, Q2 und Q3) versehen ist, welcher Dichtkörper (11) an dem zugehörigen Rahmenelement (8) form- und/oder kraftschlüssig gehalten ist.

2. Dichtungsvorrichtung nach Anspruch 1, **dadurch gekennzeichnet, dass** der Dichtkörper (11) -in Fahrzeugquerrichtung (B-B) betrachtet- zwei nebeneinander liegende erste äußere und zweite innere Schlauchabschnitte (15 und 16) besitzt, die an einem Steg (17) hängen und mit ersten und zweiten Dichtabschnitten (18 und 21) mit einer Außenseite (19) und einer Innenseite (20) der Seitentürscheibe (5) zusammenwirken.

3. Dichtungsvorrichtung nach Anspruch 2, **dadurch gekennzeichnet, dass** ein dritter Dichtabschnitt (22) des äußeren Dichtabschnitts (15) sich an einer Innenseite des Faltverdecks (2) zumindest mittelbar abstützt.

4. Dichtungsvorrichtung nach Anspruch 2, **dadurch gekennzeichnet, dass** sich ein vierter Dichtabschnitt (25) des zweiten Schlauchabschnitts an (16) einer aufrechten Wand (26) des Rahmenelements (8) abstützt.

5. Dichtungsvorrichtung nach einem oder mehreren der vorangehenden Ansprüche, **dadurch gekennzeichnet, dass** im vorderen Verdeckabschnitt (Vdv) der Dichtkörper (11) von einer Seitenleiste (24) getragen wird, die einen im Querschnitt U-förmigen Haltebereich (27) mit Steg (28) und Schenkeln (29 und 30) aufweist, wobei in dem Haltebereich (29) ein Halteeinsatz (Hes) des Dichtkörpers (11) festgesetzt ist.

6. Dichtungsvorrichtung nach einem oder mehreren der vorangehenden Ansprüche, **dadurch gekennzeichnet, dass** in dem mittleren Verdeckabschnitt (Vdm) und hinteren Verdeckabschnitt (Vdh) der dritte Dichtabschnitt (22) mit ein oder mehreren Dichtlippen (25 und 36) versehen ist, die mit der Innenseite des Faltverdecks (37) direkt oder indirekt zusammenarbeiten.

7. Dichtungsvorrichtung nach einem oder mehreren der vorangehenden Ansprüche, **dadurch gekennzeichnet, dass** der Steg (17) des Dichtkörpers (11) im mittleren Verdeckabschnitt (Vdm) und im hinteren Verdeckabschnitt (Vdk) an einem Halteabschnitt (39) des Rahmenelements (8) befestigt ist.

8. Dichtungsvorrichtung nach Anspruch 7, **dadurch gekennzeichnet, dass** zwischen Steg (17) und dem Halteabschnitt (39) ein lösbares Haltemittel, z. B. Schraube (40), vorgesehen ist.

9. Dichtungsvorrichtung nach Anspruch 2, **dadurch gekennzeichnet, dass** der erste Dichtungsabschnitt (15) zur Außenseite (19) der Seitentürscheibe (5) hin konvex gewölbt ist.

10. Dichtungsvorrichtung nach Anspruch 2, **dadurch gekennzeichnet, dass** der zur Innenseite (23) der Seitentürscheibe (5) hin gerichtete erste Dichtabschnitt (18) die Form eines Hakens (43) mit einer unteren Wand (44) und einer oberen Wand (45) aufweist, deren Bögen (46) zur Fahrzeugunterseite (Fu) hin konvex ausgebildet sind und in eine Spitze (48) münden, die gegen die Innenseite (23) der Seitentürscheibe (5) stößt, dergestalt, dass die untere Wand (44) zumindest abschnittsweise durch Formarbeit an der Seitentürscheibe (5) anliegt und die obere Wand (45) durch Verkleinerung ihres Bogens (47) die Formarbeit der unteren Wand (44) unterstützt.
